# EUROPÄISCHE PATENTSCHRIFT

(11) **EP 1 837 243 B1**
(45) Veröffentlichungstag und Bekanntmachung des Hinweises auf die Patenterteilung: **14.10.2009**
(21) Anmeldenummer: 07000310.8
(22) Anmeldetag: 09.01.2007
(51) Int. Cl.: B60R 16/02, F02M 51/00, H04B 15/02, F02D 41/20

(54) **Kabelstrang zur Ansteuerung von Einspritzventilen**
Wiring harness for controlling injector valves
Faisceau de câbles destiné à la commande des soupapes d'injection

(30) Priorität: 24.03.2006 DE 102006013543
(43) Veröffentlichungstag der Anmeldung: 26.09.2007
(73) Patentinhaber: MAN Nutzfahrzeuge Aktiengesellschaft, 80995 München (DE)
(72) Erfinder: Kalass, Rainer, 91189 Rohr (DE); Harres, Ulrich, 90441 Nürnberg (DE)

(56) Entgegenhaltungen:
- DE-A1- 3 336 624
- DE-A1- 10 019 410
- DE-A1- 19 629 688
- JP-A- 8 330 759
- US-A- 5 086 743
- US-B1- 6 259 027

## Beschreibung

Gegenstand der Erfindung ist ein Kabelstrang zur Ansteuerung von Einspritzventilen bei Brennkraftmaschinen mit einer Common-Rail-Einspritzanlage.

Bei modernen selbstzündenden Brennkraftmaschinen, insbesondere solchen die in Nutzfahrzeugen eingesetzt werden, finden zunehmend Kraftstoffeinspritzanlagen des Common-Rail-Typs Verwendung. Vorteilhaft bei solchen Anlagen ist, dass die Druckerzeugung vollständig vom Einspritzvorgang entkoppelt ist, wodurch in einem Einspritzzyklus mehrere Teileinspritzungen ermöglicht werden. Um solche Teileinspritzungen zu realisieren, müssen die am Zylinderkopf angeordneten elektrisch betätigten Einspritzventile in einem Einspritzzyklus mehrfach angesteuert werden. Die Ansteuerung erfolgt dabei mittels eines Motorsteuersystems, das in einiger Entfernung zu den Einspritzventilen am Motor oder im Motorraum angeordnet ist. Zur Verbindung von Motorsteuergerät und Einspritzventilen wird ein Kabelstrang eingesetzt, der in einem weiten Temperaturbereich eine dauerhafte Beständigkeit gegen eine Vielzahl von Medien, wie Wasser, Schmutzwasser, Salzwasser, Wasser aus Hochdruckreinigern, Reinigungsmittel, Fetten, Ölen, Kraftstoffen usw. aufweisen muss. Erreicht wird die dauerhafte Beständigkeit in bekannter Weise durch das Umhüllen der Leiter und Steckverbindungen mit einem entsprechend medienresistenten Kunststoff bzw. im Falle der Steckverbindungen mit einem medienresistenten Gehäuse.

Durch die kurzen Schaltzyklen und die erheblichen Schaltströme kommt es zu Schaltspitzen, die als Störstrahlung von den Leitungsverbindungen zwischen dem Motorsteuersystem und den Einspritzventilen abgestrahlt werden. Beim Einsatz solcher Brennkraftmaschinen in Bereichen mit erhöhten Anforderungen an eine minimierte Störstrahlung werden zusätzliche Maßnahmen erforderlich, um diese Störstrahlung auf ein zulässiges Maß zu vermindern.

Zur Verminderung von Störstrahlung kommen üblicherweise zwei Vorgehensweisen in Frage, die eine sieht eine Abschirmung der Kabelverbindungen vor, wodurch die Störstrahlung abgeblockt wird, die andere besteht darin die Ausgänge des Motorsteuersystems mit ent-sprechenden passiven Filterschaltungen auszurüsten, die verhindern, dass entsprechende Schaltspitzen auf die Kabelverbindungen gelangen.

Beide Möglichkeiten weisen für den Einsatz in Nutzfahrzeugen, insbesondere solchen die für spezielle Anwendungen lediglich in Kleinserien gebaut werden, erhebliche Nachteile auf. Im Fall der Abschirmung des Kabelstranges muss der gesamte Kabelstrang, vom Motorsteuersystem zu den Einspritzventilen, mit einer metallischen Abschirmung versehen werden. Dazu muss, wegen der oben bereits angesprochenen notwendigen Dauerbeständigkeit gegen eine Vielzahl von Medien, die metallische Abschirmung unter der Ummantelung des Kabelstrangs, die die Dauerbeständigkeit herstellt, angeordnet sein. Außerdem muss die Abschirmung zumindest an den Endpunkten des Kabelstranges auf das Massepotenzial des Motorsteuersystems gelegt werden. Wie unschwer ersichtlich scheidet eine derart aufwändige Modifikation des Kabelstranges für eine Kleinserie aus Kostengründen aus.

Ebenso verhält es sich mit einer Modifikation des Motorsteuersystems, auch diese Maßnahme wäre, falls aufgrund der technischen Gegebenheiten, wie Platzangebot im Gehäuse des Motorsteuersystems, Wärmeentwicklung usw. überhaupt möglich, mit erheblichem Aufwand verbunden.

Aus der DE 196 29 688 A1 ist ein Kabel insbesondere für einen Kabelbaum eines Kraftfahrzeugs bekannt, bei welchem auf einer flexiblen Trägerfolie wenigstens eine Leiterbahn angeordnet ist, die in einem vorgebbaren Längenraster von einer wieder ablösbaren Schutzschicht überdeckte Kontaktelemente aufweist und bis auf diese und deren Schutzschicht von einem nicht leitenden flexiblen Medium abgedeckt ist.

Ausgehend von diesem Stand der Technik ist es Aufgabe der Erfindung, eine einfach zu realisierende und damit kostengünstige Möglichkeit anzugeben, die unerwünschte Störstrahlung zu beseitigen. Gelöst wird die Aufgabe durch die Merkmale des Anspruches 1, vorteilhafte Ausgestaltungen sind in den abhängigen Ansprüchen gekennzeichnet.

Dadurch, dass zur Minimierung der elektromagnetischen Störstrahlung eine die elektromagnetische Verträglichkeit beeinflussende Filteranordnung in den Kabelstrang integriert und in diesen mit eingegossen oder eingeschäumt ist, wird der Aufwand zur Verbesserung der elektromagnetischen Verträglichkeit in vorteilhafter Weise auf ein Mindestmaß beschränkt. Zur Befestigung von Kabelstrang und Filter ist es von Vorteil an dem Filterträger eine Befestigungsanordnung vorzusehen, mittels der der Filterträger und über diesen der Kabelstrang direkt oder indirekt an der Brennkraftmaschine oder dem Motorsteuergerät festlegbar ist.

Weiter von Vorteil ist es dabei, für jede Zuleitung zu einem Einspritzventil einen Filter vorzusehen und jeweils mehrere Filter auf einem gemeinsamen Filterträger anzuordnen. Der gemeinsame Filterträger kann dabei wenigstens einen Bereich aufweisen, der mit jeweils wenigstens einem Masseanschluss eines jeden auf dem Filterträger angeordneten Filters elektrisch verbunden ist.

Dabei kann die Befestigungsanordnung vorteilhaft elektrisch leitend ausgeführt und elektrisch leitend mit dem Filterträger verbunden sein, so dass der Filterträger und über diesen die Masseanschlüsse der Filter ohne Zusatzaufwand an das Massepotential des Motorsteuergerätes anschließbar sind. Die Befestigungseinrichtung kann dabei als wenigstens eine Durchgangsbuchse oder Lasche ausgebildet sein, die jeweils mittels einer Durchgangsschraube an der Brennkraftmaschine oder dem Motorsteuergerät direkt oder indirekt festlegbar ist.

Um eine möglichst lückenlose Medienresistenz des Kabelstranges zu erreichen, ist es von Vorteil, Filtern und Filterträger vor dem Eingießen oder Einschäumen mit einer elektrisch isolierenden medienresistenten Umhüllung zu versehen.

Gleichfalls von Vorteil ist es, den Filterträger mit den darauf angeordneten Bauelementen mittels einer Vergussmasse einzugießen und oder einzuschäumen, so dass sich die Bauteile gegeneinander und gegen den Filterträger schwingungsarm abstützen. Dadurch wird schwingungsinduzierten Brüchen von z.B. Bauteilanschlüssen vorgebeugt. Zur Sicherung gegen mechanische Einflüsse ist der Filterträger zusammen mit dem Kabelstrang mechanisch formgebend eingeschäumt oder eingegossen, wobei die so erzeugte Umschließung in vorteilhafter Weise den mechanischen Schutz im Sinne eines Gehäuses sicherstellt.

Zur Herstellung der notwendigen Masseverbindung zwischen den Filterschaltungen auf dem Filterträger und dem Motorsteuergerät ist es von Vorteil, den Filterträger in unmittelbarer Nähe zum Motorsteuergerätes oder idealer Weise am Gehäuse des Motorsteuergerätes anzuordnen.

Eine weitere Verbesserung der elektromagnetischen Verträglichkeit der Anordnung ist vorteilhaft dadurch zu erreichen, dass die Bauelemente der Filterschaltungen auf dem Filterträger in einer die elektromagnetische Kopplung zwischen ihnen minimierenden Weise angeordnet sind. Ebenfalls von Vorteil ist es, die zum Filterträger führenden Leitungen und die vom Filterträger abgehenden Leitungen nicht nebeneinander anzuordnen und hinführenden Leitungen, ebenso wie abgehenden Leitungen, als verdrillte Leitungspaare auszuführen, wobei die Drallrichtung und Schlagzahl von hinführenden Leitungspaaren und abgehenden Leitungspaaren unterschiedlich zu wählen ist.

Beispiele der erfindungsgemäßen Anordnung sind nachfolgend unter Zuhilfenahme der Zeichnungen näher erläutert, es zeigen:
- Fig. 1.: Einen Kabelstrang mit integrierter Filteranordnung
- Fig. 2.: Eine Filteranordnung
- Fig. 3.: Die Filteranordnung aus Fig. 2 in einer Schnittdarstellung
- Fig. 4.: Die Filteranordnung aus Fig. 2 in ausgebrochener Darstellung
- Fig. 5: Eine Darstellung einer Filteranordnung als elektrisches Schaltbild
- Fig. 6a - 6d: Eine Filteranordnung für eine 6-Zylinder-Brennkraftmaschine in unterschiedlichen Ansichten
- Fig. 6e: Eine Anordnung zweier benachbarter Drosseln
- Fig. 7: Ein Motorsteuergerät mit daran angeordneter, in den Kabelstrang integrierter Filteranordnung

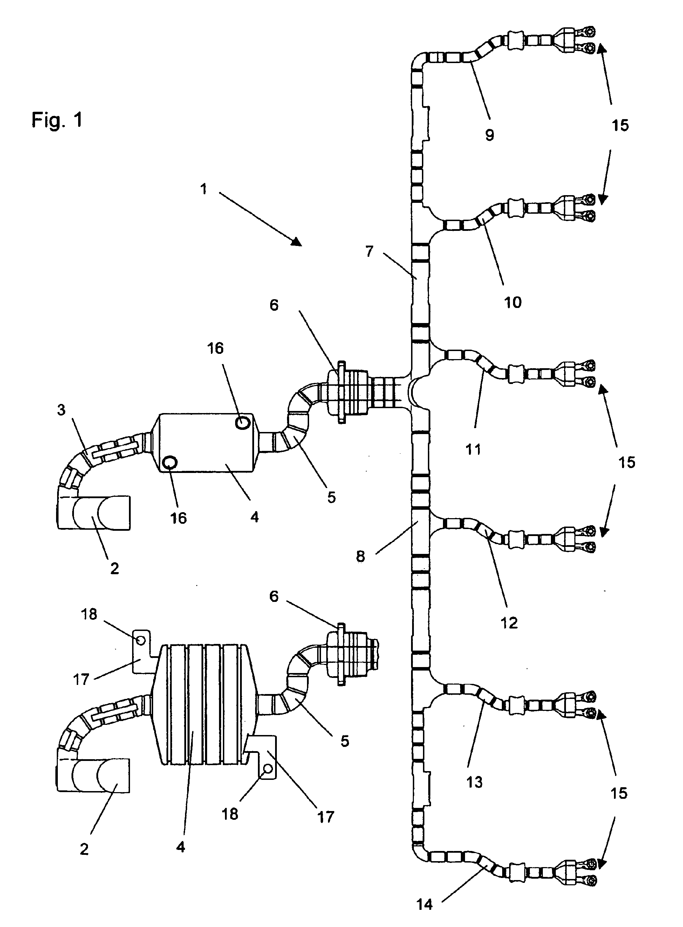

Die Darstellung in Fig. 1 zeigt einen Kabelstrang 1, der an seinem einen Ende einen Steckanschluss 2 zur Verbindung mit einem Motorsteuergerät (nicht dargestellt) aufweist. Von dem Steckanschluss 2 ausgehend führt der Kabelstrang 1 in einem ersten Teilstück 3 zu einem Filtermodul 4 und von diesem in einem zweiten Teilstück 5 weiter zu einem Durchführungsflansch 6. Der Durchführungsflansch 6 dient dazu, den Kabelstrang 1 durch den Ventildeckel der Brennkraftmaschine (nicht dargestellt) zu führen und die Durchführung abzudichten. Nach dem Durchführungsflansch 6 teilt sich der Kabelstrang 1 in zwei Teilstränge 7, 8, von denen Zuleitungen 9 - 14 zu den Einspritzventilen der Brennkraftmaschine (nicht dargestellt) abzweigen. Jede der Zuleitungen 9-14 besteht aus zwei Leitungen, die an ihren Enden Anschlussösen 15 aufweisen mit denen sie im montierten Zustand mit den elektrischen Anschlüssen der Einspritzventile verbunden sind.

Hergestellt wird der Kabelstrang 1 dadurch, dass die Leitungen und das Filtermodul 4, mit Ausnahme des Steckanschlusses 2 und der Anschlussösen 15, in einen Träger aus Kunststoff eingegossen oder eingeschäumt werden, wobei der Träger einerseits den Kabelstrang 2 vorformt und andererseits ein entsprechendes Maß an Restelastizität besitzt, so dass eine einfache Montage gewährleistet ist. Dadurch dass der Kabelstrang 1 den Umgebungsbedingungen im Motorraum und teilweise sogar innerhalb des Ventildeckels ausgesetzt ist, weist der verwendete Kunststoff eine ausreichende Resistenz gegen die dort herrschenden Umgebungsbedingungen, insbesondere gegen Medien wie Wasser, Schmutzwasser, Salzwasser, Wasser aus Hochdruckreinigern, Reinigungsmittel, Fetten, Ölen, Kraftstoffen usw. auf und gewährleistet den mechanischen Schutz der darin enthaltenen Leitungen und Bauteile. Die Medienresistenz der Leitungen und Bauteile selbst wird durch eine diese unmittelbar umschließende medienresistente Isolierung erreicht, im Falle der Bauteile des Filtermoduls 4 z. B durch eine hermetisch dichte Folie oder einen hermetisch dichten Lackauftrag, worauf später noch eingegangen wird.

Zur Befestigung des Filtermoduls 4 sind in dieses Durchgangsbuchsen 16 mit eingegossen, durch die das Filtermodul 4 und damit der mit dem Filtermodul 4 verbundene Kabelstrang 1 relativ zum Steckanschluss 2 und zum Durchführungsflansch 6 schwingungsarm festlegbar sind.

Wie ebenfalls in Fig. 1 links unten dargestellt, kann das Filtermodul 4, anstelle der vorstehend beschriebenen Durchgangsbuchsen, eingegossene Befestigungslaschen 17 aufweisen, die mit entsprechenden Befestigungsbohrungen 18 versehen sind.

Zur elektrischen Verbindung der im Filtermodul 4 angeordneten Filter mit dem Massepotential der Motorsteuereinheit, wie dies bei bestimmten elektrischen Filterschaltungen notwendig ist, können die Befestigungsbuchsen 16 bzw. die Befestigungslaschen 17 elektrisch leitend ausgeführt und mit den Filterschaltungen verbunden sein. Näheres dazu ist nachfolgend ausgeführt.

Hinsichtlich der Anordnung des Filtermoduls 4 relativ zum Motorsteuergerät ist es von Vorteil, das erste Teilstück 3 des Kabelstrangs 4, also die Verbindungsleitungen zwischen Motorsteuergerät und Filtermodul 4 möglichst kurz zu halten. Alternativ oder zusätzlich besteht in Abweichung vom Beispiel nach Fig. 1 die Möglichkeit, das erste Teilstück 3 des Kabelstrangs 1 mit einer konventionellen, die Leitungen umhüllenden metallischen Abschirmung zu versehen und diese einerseits auf das Massepotential des Motorsteuergerätes zu legen und andererseits mit dem Masseanschluss des Filtermoduls zu verbinden.

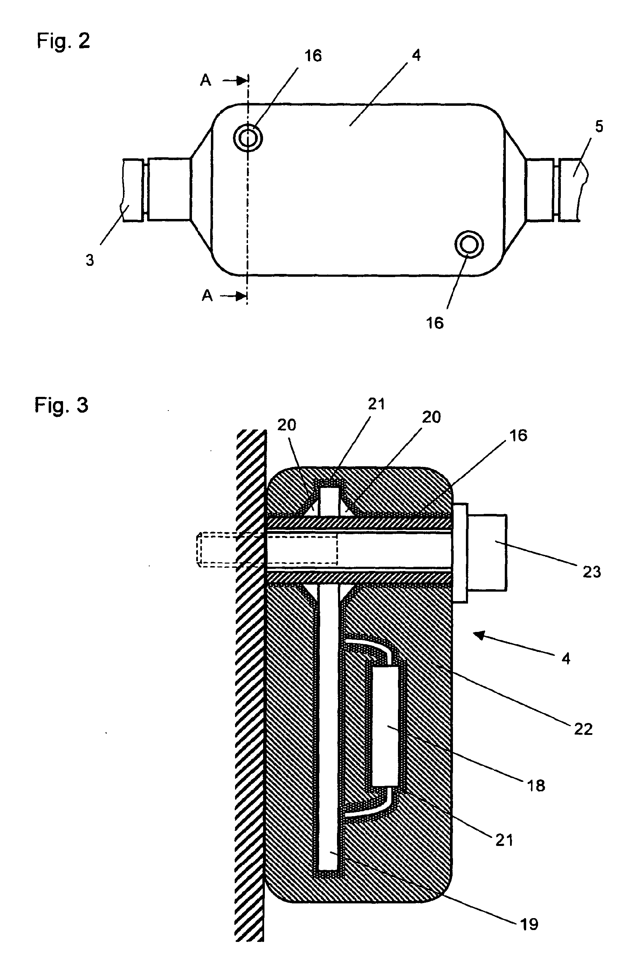

Fig. 2 zeigt das Filtermodul 4 (Fig. 1 obere Darstellung) mit den daran angeordneten Durchgangsbuchsen 16. Durch die Anordnung ist ein Schnitt A-A gelegt, dessen Schnittebene in Fig. 3 vergrößert dargestellt ist. Wie aus der Darstellung in Fig. 3 erkennbar, ist für die elektrischen Bauelemente 18, die die elektrischen Filterschaltungen bilden, ein Filterträger 19 in Form einer Platine vorgesehen. Der Filterträger 19 wird von der Durchgangsbuchse 16 durchragt, und ist mit dieser über eine Lötverbindung 20 elektrisch leitend verbunden. Die vorstehend beschriebene Anordnung ist mit einer Isolierschicht 21, z. B. mit Isolierlack allseitig umhüllt und in eine Kunststoffummantelung 22 eingegossen. Zur Befestigung des Filtermoduls 4 an der Brennkraftmaschine oder einem daran angeordneten Träger ist eine Schraube 23 vorgesehen, die die Buchse 16 durchragt und an der Brennkraftmaschine oder einem daran angeordneten Träger verankert ist. Die Durchgangsbuchse 16 dient dabei nicht nur der Befestigung, sondern nimmt gleichzeitig den Schraubendruck auf und verbindet den Filterträger 19 elektrisch mit dem Punkt an dem die Anordnung befestigt ist.

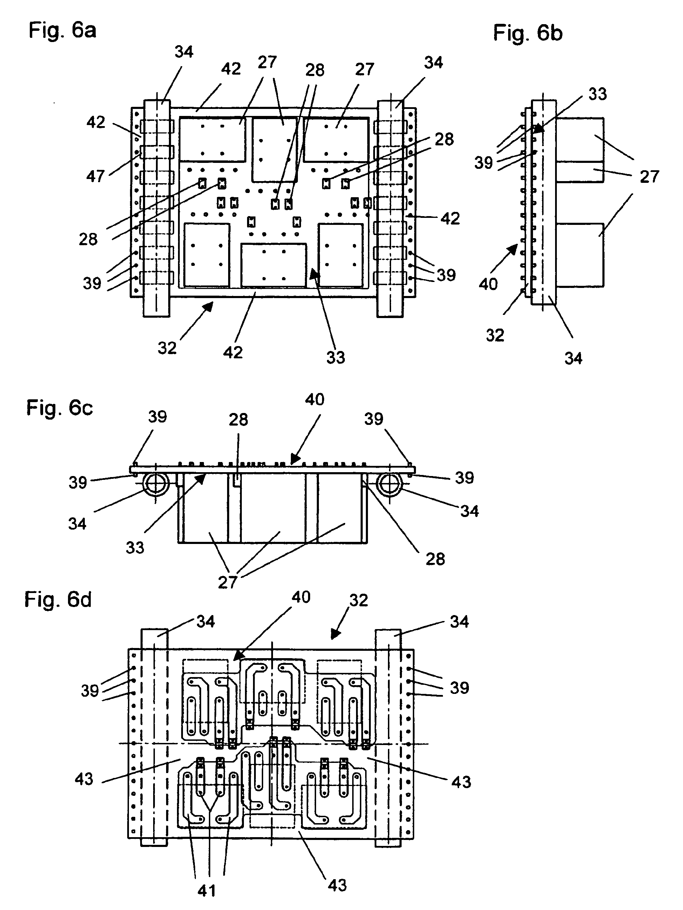

Alternativ zu der in Fig. 3 gezeigten Anordnung kann die Durchgangsbuchse 16 natürlich auch parallel zu dem Filterträger 19 angeordnet und in Richtung ihrer Längsachse mit diesem verlötet oder verschweißt sein. In Anlehnung an die Darstellung in Fig. 3 hat man sich den Filterträger 19 bei dieser alternativen Anordnung um 90° zu seiner Längsachse gekippt vorzustellen. Auf eine derartige Anordnung wird später in Verbindung mit den Figuren 6a bis 6d näher eingegangen.

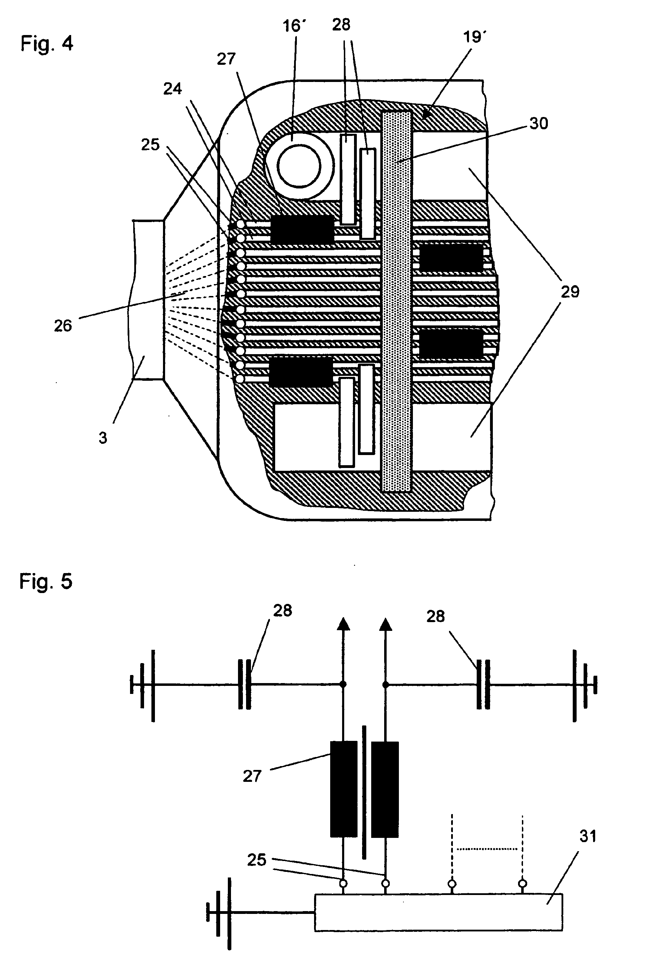

Eine weitere Detaildarstellung der Anordnung nach Fig. 2 zeigt Fig. 4. Die im Filtermodul 4 angeordneten Leiterbahnen und Bauteile sind in einem ausgebrochen dargestellten Bereich sichtbar gemacht. Im Gegensatz zur Darstellung in Fig. 3 handelt es sich bei dem Filterträger 19' nicht um eine Platine, sondern um eine Metallstreifen-Struktur, wobei die Leiterbahnen 24 bildende erste Metallstreifen und die Masseanschlüsse 29 bildende zweite Metallstreifen mittels isolierender Halter 30 in einem vorgegebenen Abstand zueinander fixiert sind. Die Fixierung erfolgt dadurch, dass die Metallstreifen entweder in den Halter 30 eingelegt oder alternativ mit Kunststoff umspritzt werden, wobei der Kunststoff nach dem Aushärten den Halter 30 ausbildet.

An die Leiterbahnen 24 sind von dem Motorsteuergerät (nicht dargestellt) kommende Leitungspaare 25 angeschlossen, die wiederum zu einem Leitungsbündel 26 zusammengefasst und in das Teilstück 3 des Kabelstranges eingegossen sind. Jeweils ein Leitungspaar 25 ist zur Ansteuerung eines Einspritzventils (nicht dargestellt) vorgesehen und mit zwei Leiterbahnen 24 des Filterträgers 19' verbunden, in die eine Drossel 27 geschaltet ist. Der Drossel 27 nachgeordnet sind die Leiterbahnen 24 über jeweils einen Kondensator 28 mit einem Masseanschluss 29 verbunden. Die vorstehend beschriebene Anordnung von Filterbauteilen ist für jedes Leitungspaar einmal vorhanden, so dass sich eine Beschreibung der weiteren in Fig. 4 gezeigten gleichartigen Bauteilanordnungen erübrigt.

Der Masseanschluss 29 als Teil des Filterträgers 19' ist, ebenso wie beim Beispiel nach Figur 3, mit einer Durchgangsbuchse 16' mittels z. B. eine Lötverbindung elektrisch leitend verbunden. In Figur 4 nicht sichtbar, wird auch bei diesem Ausführungsbeispiel der Filterträger 19', zusammen mit den darauf angeordneten Bauteilen, vor dem Eingießen oder Einschäumen mit einem elektrisch isolierenden Überzug, z. B. aus medienresistentem Isolierlack, versehen.

Selbstverständlich besteht in Abweichung zur Darstellung in Fig. 4 auch die Möglichkeit, den Filterträger als Leiterplatte auszuführen, die Leiterbahnen und Masseanschlüsse sind dann aus der Kupferkaschierung der Leiterplatte freigeätzt.

Die für die Filterschaltungen verwendeten Bauteile können konventionelle Bauteile mit Drahtanschlüssen oder SMD-Bauteile sein.

Das elektrische Schaltbild einer Filterschaltung ist in Fig. 5 dargestellt. Von einem Motorsteuergerät 31 gehen jeweils paarweise Leitungen 25 ab. In jeweils ein Leitungspaar ist eine Drossel 27 geschaltet. Die beiden Ausgänge der Drossel 27 sind einerseits mit den Anschlüssen des Einspritzventils und andererseits über jeweils einen Kondensator 28 mit Massepotential verbunden. Massepotential bedeutet in diesem Fall das Massepotential des Motorsteuergerätes 31.

Bei den Drosseln 27 handelt es sich um stromkompensierte Drosseln, die Auslegung der Drossel 27 bzw. der Kondensatoren 28 erfolgt in Abhängigkeit von den zu eliminierenden Störfrequenzen, der Betriebsspannung und dem Leistungsbedarf der Einspritzventile.

Ein Beispiel für die optimierte Anordnung von Filterschaltungen des in Verbindung mit Figur 5 beschriebenen Typs auf einem Filterträger zeigen die Darstellungen in den Figuren 6a bis 6 e.

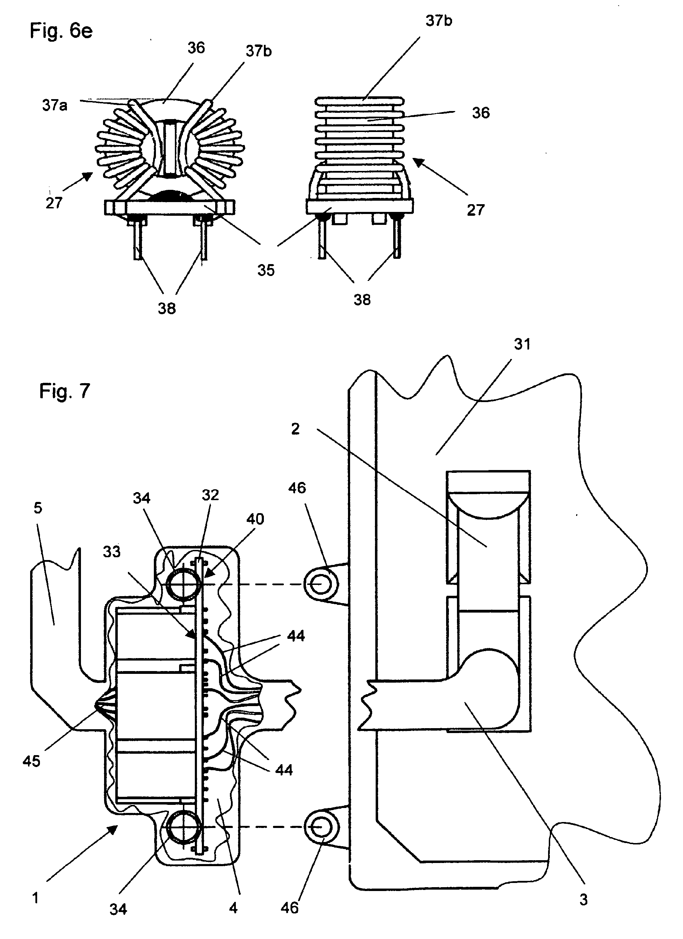

Die Anordnung ist für eine 6-Zylinder Brennkraftmaschine konzipiert, verfügt also über 6 gleichartige Filterschaltungen, die jeweils in eine aus Hin- und Rückleitung bestehenden Ansteuerleitung für ein Einspritzventil geschaltet sind. Für die nachfolgende Beschreibung sind, wenn nicht auf eine der Figuren ausdrücklich verwiesen ist, die Figuren 6a bis 6e, die den bestückten Filterträger in unterschiedlichen Ansichten zeigen, in Kombination heranzuziehen. Fig. 6a zeigt eine Aufsicht auf die Bestückungsseite, Fig. 6b und 6c jeweils Seitenansichten und Fig. 6d eine Ansicht auf die Leiterbahnseite des Filterträgers. Die Fig. 6e zeigt die Orientierung zweier benachbarter Drosseln zueinander.

Der in den Figuren 6a bis 6d gezeigte Filterträger besteht aus einer Platine 32, auf deren Bestückungsseite 33 Drosseln 27, Kondensatoren 28 und zwei parallel zur Bestückungsseite 33 jeweils entlang einer Schmalseite der Platine 32 verlaufende rohrförmige, elektrisch leitfähige Befestigungsbuchsen 34 angeordnet sind. Die Platine 32 ist beidseitig mit Kupfer kaschiert, auf der Bestückungsseite 33 ist der Bereich, in dem sich die Drosseln 27 und die Kondensatoren 28 befinden, ohne Kaschierung und wird von einer zusammenhängenden Kupferfläche 42 eingeschlossen. Die Befestigungsbuchsen 34 sind auf die Kupferkaschierung aufgelötet. Um die für das Verlöten benötigte Wärmemenge und den durch die Erwärmung bedingten Verzug der Anordnung möglichst gering zu halten sind in der Kupferkaschierung unter den Befestigungsbuchsen Freisparungen 47 vorgesehen. Wie in Fig. 6c erkennbar sind die Befestigungsbuchsen auf ihrer der Bestückungsseite 33 der Platine 32 gegenüberliegenden Seite abgeflacht, so dass sich eine größere Anlage- bzw. Kontaktfläche ergibt.

Um eine möglicht geringe magnetische Beeinflussung der Drosseln 27 untereinander zu erreichen, sind die Drosseln 27 so angeordnet, dass die Achse der sich in ihnen aufbauenden Magnetfelder bei jeweils zwei benachbarten Drosseln 27 in einem Winkel von ca. 90 Grad zueinander stehen. Eine derartige Anordnung zweier benachbarter Drosseln 27 zeigt Fig. 6e. Die aus einer mit elektrischen Anschlüssen 38 versehenen Trägerplatte 35, einem Ringkern 36 und gegenläufigen Wicklungen 37a, 37b bestehenden Drosseln sind um 90 Grad zueinander verdreht, wodurch sich eventuelle wechselseitige magnetische Beeinflussungen auf ein Minimum reduzieren.

Um ein Übersprechen zwischen Leitungen vor den Filterschaltungen, also der mit Störsignalen "verschmutzten Seite" und Leitungen nach den Filterschaltungen, die auch als "saubere Seite" bezeichnet wird, zu minimieren, ist sicherzustellen, dass Parallelführungen von Leitungen der "sauberen Seite" mit Leitungen der "verschmutzten Seite" minimiert werden. Ein entsprechendes Beispiel zeigt Fig. 6d. Die dort dargestellte Leiterbahnseite 40 der Platine 32 weist Leiterbahnen 41 auf, die nur geringfügig über die Kontur der gestrichelt angedeuteten, auf der Bestückungsseite 33 angeordneten Drosseln 27 und Kondensatoren 28 hinaus ragen. Dadurch dass diese Leiterbahnen nur sehr kurz sind wird das Übersprechen minimiert.

Auch auf der Leiterbahnseite sind große zusammenhängende Kupferflächen 43 angeordnet, die die Bereiche mit den Leiterbahnen 41 umschließen und den Masse-Anschluss der Filterschaltungen bilden. Zur Verbindung dieser Kupferflächen 43 mit den Kupferflächen 42 auf der Bestückungsseite 33 der Platine 32 sind, wie in der Ansicht nach Fig. 6b besonders gut erkennbar, Stifte 39 vorgesehen, die die Platine 32 im Bereich der Kupferflächen 42 und 43 durchkontaktieren. Über die mit der Kupferfläche 42 verlöteten Befestigungsbuchsen 34 werden die vorstehend angesprochenen Kupferflächen 42 und 43 auf das Massepotential des Motorsteuergerätes 31 gelegt, wie dies nachfolgend in Verbindung mit Fig. 7 näher ausgeführt ist.

Fig. 7 zeigt ein Motorsteuergerät 31 an das über den Steckverbinder 2 der Kabelstrang 1 angeschlossen ist. Das erste Teilstück 3 des Kabelstranges 1 führt vom Steckverbinder 2 zu einer ersten Seite des Filtermoduls 4, das in ausgebrochener Darstellung den Filterträger in der Ansicht gemäß Fig. 6c, allerdings um 90 Grad nach rechts gedreht, zeigt. Die den Filterträger bildende bestückte Platine 32 liegt mit ihrer Leiterbahnseite 40 dem ersten Teilstück 3 des Kabelstrangs 1 gegenüber, so dass die Leitungen 44 die vom Steckverbinder 2 zur Platine 32 führen direkt an der Leiterbahnseite 40 angeschlossen sind. Auf der dem ersten Teilstück 3 des Kabelstranges 1 gegenüber liegenden Seite des Filtermoduls 4 führt der Kabelstrang 1 mit seinem zweiten Teilstück 5 weiter zu den Einspritzventilen wie diese in Verbindung mit der Figur 1 bereits beschrieben ist. Um eine Parallelführung der Leitungen 44 mit den vom Filtermodul abgehenden Leitungen 45 zu vermeiden, und dadurch das Übersprechen zwischen der mit Störsignalen verschmutzten Seite der Filterschaltung und der sauberen Seite nach der Filterschaltung zu minimieren, sind die abgehenden Leitungen auf der Bestückungsseite 33 an die Platine 32 herangeführt und über entsprechende Bohrungen (nicht dargestellt) in der Platine 32 an die Leiterbahnen angeschlossen.

Die Verbindung des Massepotentiales der Filterschaltungen mit dem Massepotential des Motorsteuergerätes 31 erfolgt dadurch, dass die auf dem Massepotential der Filterschaltungen liegenden Befestigungsbuchsen 34 mittels Durchgangsschrauben (nicht dargestellt) die die Befestigungsbuchsen 34 in Richtung senkrecht zur Zeichenebene durchragen, an metallischen Befestigungslaschen 46 des ebenfalls metallischen Gehäuses des Motorsteuergerätes 31 befestigt werden. In Fig. 7 ist dies durch die gestrichelten Linien von den Befestigungsbuchsen 34 zu den Befestigungslaschen 46 angedeutet ist.

Eine weitere Maßnahme zur Verbesserung der elektromagnetischen Verträglichkeit der Anordnung aus Motorsteuergerät 31, Kabelstrang 1 und Filtermodul 4 besteht darin, die vom Motorsteuergerät 31 zum Filtermodul 4 hinführenden Leitungen, ebenso wie die vom Filtermodul 4 zu den Einspritzventilen abgehenden Leitungen, als verdrillte Leitungspaare auszuführen derart, dass die Drallrichtung und Schlagzahl von hinführenden Leitungspaaren und abgehenden Leitungspaaren unterschiedlich ist.

## Patentansprüche

1. Kabelstrang zur Ansteuerung von elektrisch betätigten Einspritzventilen bei Brennkraftmaschinen mit einer Common-Rail-Einspritzanlage, wobei
- der Kabelstrang (1) ausgebildet ist, ein Motorsteuergerät (31) mit den Einspritzventilen der Brennkraftmaschine zu verbinden,
- die elektrischen Kabel in einen Träger eingegossen und/ oder eingeschäumt sind,
- der Träger die Form des Kabelstrangs (1) weitgehend vorgibt,
- in den Kabelstrang (1) die elektromagnetische Verträglichkeit beeinflussende Filter mit eingegossen und/ oder eingeschäumt sind,
- jeweils mehrere Filter auf einem gemeinsamen Filterträger (19, 19') angeordnet sind,
- an dem Filterträger (19, 19') eine Befestigungsanordnung vorgesehen ist, mittels der der Filterträger (19, 19') direkt oder indirekt an der Brennkraftmaschine oder dem Motorsteuergerät (31) festlegbar ist.

2. Anordnung nach Anspruch 1, **dadurch gekennzeichnet, dass** jeder Zuleitung zu einem Einspritzventil ein Filter zugeordnet ist.

3. Anordnung nach Anspruch 1, **dadurch gekennzeichnet, dass** der gemeinsame Filterträger (19, 19') wenigstens einen Bereich aufweist, der mit jeweils wenigstens einem Masseanschluss eines jeden auf dem Filterträger (19, 19') angeordneten Filters elektrisch verbunden ist.

4. Anordnung nach einem der vorhergehenden Ansprüche, **dadurch gekennzeichnet, dass** die Befestigungsanordnung elektrisch leitend ausgeführt und mit dem Bereich des Filterträgers (19, 19') verbunden ist, der eine elektrisch leitende Verbindung zu den Masseanschlüssen der Filterschaltungen aufweist, wobei die Befestigungsanordnung direkt oder über Teile der Brennkraftmaschine mit dem Massepotential des Motorsteuergerätes (31) verbindbar ist.

5. Anordnung nach einem der vorhergehenden Ansprüche, **dadurch gekennzeichnet, dass** die Befestigungseinrichtung als Durchgangsbuchse (16, 16') ausgebildet ist, die mittels einer Durchgangsschraube (23) an der Brennkraftmaschine oder dem Motorsteuergerät (31) direkt oder indirekt festlegbar ist.

6. Anordnung nach einem der vorhergehenden Ansprüche, **dadurch gekennzeichnet, dass** die Befestigungseinrichtung als Lasche (17) ausgebildet ist die mittels einer Durchgangsschraube an der Brennkraftmaschine direkt oder indirekt festlegbar ist.

7. Anordnung nach einem der vorhergehenden Ansprüche, **dadurch gekennzeichnet, dass** die Filter und Filterträger (19, 19') vor dem Eingießen und/ oder Einschäumen mit einer elektrisch isolierenden Umhüllung (21) versehen sind, wobei die Umhüllung (21) den Filterträger (19, 19') und die auf diesem angeordneten Bauelemente mediendicht umschließt.

8. Anordnung nach Anspruch 7, **dadurch gekennzeichnet, dass** der umhüllte Filterträger (19, 19') mit den darauf angeordneten Bauelementen mittels einer Vergussmasse eingegossen wird, derart, dass sich die Bauteile gegeneinander und gegen den Filterträger (19, 19') schwingungsarm abstützen.

9. Anordnung nach einem der vorhergehenden Ansprüche, **dadurch gekennzeichnet, dass** der Filterträger (19, 19') mit einem Kunststoff mechanisch formgebend eingeschäumt ist.

10. Anordnung nach einem der vorhergehenden Ansprüche, **dadurch gekennzeichnet ,dass** der eingeschäumte oder eingegossene Filterträger (19, 19') in unmittelbarer Nähe zum Motorsteuergerätes (31) anordbar ist.

11. Anordnung nach einem der vorhergehenden Ansprüche, **dadurch gekennzeichnet, dass** der eingeschäumte oder eingegossene Filterträger (19, 19') am Gehäuse des Motorsteuergerätes (31) anordbar ist.

12. Anordnung nach einem der vorhergehenden Ansprüche, **dadurch gekennzeichnet, dass** die die Filter bildenden Bauelemente auf dem Filterträger (19, 19') so angeordnet sind, dass die elektromagnetische Kopplung zwischen ihnen minimiert ist.

13. Anordnung nach einem der vorhergehenden Ansprüche, **dadurch gekennzeichnet, dass** die zu dem Filterträger (19, 19') führenden Leitungen und die von dem Filterträger (19, 19') abgehenden Leitungen nicht nebeneinander zueinander verlaufen.

14. Anordnung nach einem der vorhergehenden Ansprüche**, dadurch gekennzeichnet, dass** die zu dem Filterträger (19, 19') hinführenden Leitungen und die von dem Filterträger (19, 19') abgehenden Leitungen verdrillte Leitungspaare sind und dass die Drallrichtung und Schlagzahl von hinführenden Leitungspaaren und abgehenden Leitungspaaren unterschiedlich ist.

## Claims

1. A loom of cables for actuating electrically operated injection valves in internal combustion engines with a common-rail injection system, wherein
- the loom of cables (1) is designed to connect an engine control unit (31) with the injection valves of the internal combustion engine,
- the electric cables are cast and/or foamed into a support,
- the support largely dictates the shape of the loom of cables (1),
- filters influencing the electromagnetic compatibility are jointly cast and/or foamed into the loom of cables (1),
- in each case a plurality of filters are arranged on a common filter support (19, 19'),
- a fastening arrangement is provided on the filter support (19, 19'), by means of which the filter support (19, 19') can be fixed directly or indirectly on the internal combustion engine or the engine control unit (31).

2. An arrangement according to Claim 1, **characterised in that** a filter is associated with each feed line to an injection valve.

3. An arrangement according to Claim 1, **characterised in that** the common filter support (19, 19') has at least one region which is electrically connected with in each case at least one earth connection of each filter arranged on the filter support (19, 19').

4. An arrangement according to one of the preceding claims, **characterised in that** the fastening arrangement is designed to be electrically conductive and is connected to the region of the filter support (19, 19'), which has an electrically conductive connection to the earth connections of the filter circuits, the fastening arrangement being able to be connected directly or via parts of the internal combustion engine to the earth potential of the engine control unit (31).

5. An arrangement according to one of the preceding claims, **characterised in that** the fastening means is designed as a through bushing (16, 16'), which can be fixed directly or indirectly to the internal combustion engine or the engine control unit (31) by means of a penetrating screw (23).

6. An arrangement according to one of the preceding claims, **characterised in that** the fastening means is designed as a tab (17), which can be fixed directly or indirectly to the internal combustion engine by means of a penetrating screw.

7. An arrangement according to one of the preceding claims, **characterised in that** the filters and filter supports (19, 19') before the casting-in and/or foaming-in are provided with an electrically insulating wrapping (21), the wrapping (21) surrounding the filter support (19, 19') and the structural elements arranged thereon in a media-tight manner.

8. An arrangement according to Claim 7, **characterised in that** the wrapped filter support (19, 19') with the structural elements arranged thereon is cast in by means of an embedding compound, such that the components are supported against one another and against the filter support (19, 19') in a low-vibration manner.

9. An arrangement according to one of the preceding claims, **characterised in that** the filter support (19, 19') is foamed in with a plastics material in mechanically shaping manner.

10. An arrangement according to one of the preceding claims, **characterised in that** the foamed-in or cast-in filter support (19, 19') can be arranged in the immediate vicinity of the engine control unit (31).

11. An arrangement according to one of the preceding claims, **characterised in that** the foamed-in or cast-in filter support (19, 19') can be arranged on the housing of the engine control unit (31).

12. An arrangement according to one of the preceding claims**, characterised in that** the structural elements forming the filter are arranged on the filter support (19, 19') such that the electromagnetic coupling between them is minimised.

13. An arrangement according to one of the preceding claims, **characterised in that** the lines leading to the filter support (19, 19') and the lines departing from the filter support (19, 19') do not run towards each other next to each other [sic].

14. An arrangement according to one of the preceding claims, **characterised in that** the lines leading to the filter support (19, 19') and the lines departing from the filter support (19, 19') are twisted pairs of lines and that the direction of twist and number of lays of incoming pairs of lines and outgoing pairs of lines is different.

## Revendications

1. Faisceau de câbles pour commander des soupapes d'injection à commande électrique de moteurs à combustion interne équipés d'une installation d'injection à rampe commune,
selon lequel
- le faisceau de câbles (1) est réalisé pour relier un appareil de commande de moteur (31) aux injecteurs du moteur à combustion interne,
- le câble électrique est coulé dans un support et/ou est intégré par expansion,
- le support prédéfinit en grande partie la forme du faisceau de câbles (1),
- des filtres influençant la compatibilité électromagnétique sont noyés et/ou intégrés par expansion dans le faisceau de câbles (1),
- plusieurs filtres sont installés sur un support de filtre commun (19, 19'),
- un dispositif de fixation, sur le support de filtre (19, 19'), permet à ce support de filtre (19, 19') d'être fixé directement ou indirectement au moteur à combustion interne ou à l'appareil de commande de moteur (31).

2. Dispositif selon la revendication 1,
**caractérisé en ce qu'**
un filtre est associé à chaque ligne d'alimentation d'un injecteur.

3. Dispositif selon la revendication 1,
**caractérisé en ce que**
le support de filtre commun (19, 19') comporte au moins une zone chaque fois reliée électriquement à au moins un branchement de masse de chacun des filtres installés sur le support de filtre (19, 19').

4. Dispositif selon les revendications précédentes,
**caractérisé en ce que**
le dispositif de fixation est électroconducteur et il est relié à la zone du support de filtre (19, 19') qui comporte une liaison électroconductrice avec les branchements de masse des circuits de filtre, le dispositif de fixation étant relié directement, ou par l'intermédiaire de pièces du moteur à combustion interne, au potentiel de masse de l'appareil de commande de moteur (31).

5. Dispositif selon les revendications précédentes,
**caractérisé en ce que**
l'installation de fixation est réalisée sous la forme d'un manchon de passage (16, 16') fixé directement ou indirectement par l'intermédiaire d'une vis traversant (23) au moteur à combustion interne ou à l'appareil de commande de moteur (31).

6. Dispositif selon les revendications précédentes,
**caractérisé en ce que**
l'installation de fixation est réalisée sous la forme d'une patte (17) fixée directement ou indirectement au moteur à combustion interne par l'intermédiaire d'une vis traversante.

7. Dispositif selon les revendications précédentes,
**caractérisé en ce que**
les filtres et les supports de filtre (19, 19') sont munis d'un enrobage électro-isolant (21) avant d'être intégrés par coulée et/ou par expansion, l'enrobage (21) entoure le support de filtre (19, 19') et les composants qu'il porte de façon étanche aux fluides.

8. Dispositif selon la revendication 7,
**caractérisé en ce que**
le support de filtre (19, 19') enrobé, est entouré par une masse coulée avec les composants qu'il porte, de façon à ce que ces composants se soutiennent réciproquement entre eux et par rapport au support de filtre (19, 19') afin de ne pas transmettre les vibrations.

9. Dispositif selon les revendications précédentes,
**caractérisé en ce que**
le support de filtre (19, 19') est entouré d'une matière plastique, expansée, donnant mécaniquement la forme.

10. Dispositif selon les revendications précédentes,
**caractérisé en ce que**
le support de filtre expansé ou coulé (19, 19') est prévu au voisinage immédiat de l'appareil de commande de moteur (31).

11. Dispositif selon les revendications précédentes,
**caractérisé en ce que**
le support de filtre expansé ou coulé (19, 19') est prévu sur le boîtier de l'appareil de commande de moteur (31).

12. Dispositif selon les revendications précédentes,
**caractérisé en ce que**
les composants qui constituent le filtre sont installés sur le support de filtre (19, 19') de façon à minimiser le couplage électromagnétique entre ces composants.

13. Dispositif selon les revendications précédentes,
**caractérisé en ce que**
les câbles reliés au support de filtre (19, 19') et les câbles partant du support de filtre (19, 19') sont disposés côte à côte.

14. Dispositif selon les revendications précédentes,
**caractérisé en ce que**
les câbles allant au support de filtre (19, 19') et les câbles partant du support de filtre (19, 19') sont des paires de conducteurs torsadés et le sens de la torsion et le nombre de spires est différent pour les paires de câbles d'entrée et les paires de câbles de sortie.
